(19) Europäisches Patentamt
European Patent Office
Office européen des brevets

(11) **EP 4 769 302 A1**

(12) **EUROPEAN PATENT APPLICATION**
published in accordance with Art. 153(4) EPC

(43) Date of publication:
**01.07.2026 Bulletin 2026/27**

(21) Application number: **25818918.2**

(22) Date of filing: **14.05.2025**

(51) International Patent Classification (IPC):
**G06T 7/00** (2017.01)

(52) Cooperative Patent Classification (CPC):
**G06T 5/90; G06T 7/00; G06T 7/90**

(86) International application number:
**PCT/CN2025/094800**

(87) International publication number:
**WO 2025/251860 (11.12.2025 Gazette 2025/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.06.2024 CN 202410745724**

(71) Applicant: **Honor Device Co., Ltd.**
**Shenzhen, Guangdong 518040 (CN)**

(72) Inventors:
• **ZHANG, Jiasen**
  **Shenzhen, Guangdong 518040 (CN)**
• **DING, Yue**
  **Shenzhen, Guangdong 518040 (CN)**
• **LEI, Caihua**
  **Shenzhen, Guangdong 518040 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **IMAGE LOSS DETERMINATION METHOD AND RELATED APPARATUS**

(57) Embodiments of this application provide a method for determining an image loss and a related apparatus. The method includes: generating a standard dynamic range SDR image based on an original high dynamic range HDR image; generating a reconstructed HDR image based on the original HDR image and the SDR image; and determining image losses of a plurality of areas in the reconstructed HDR image based on the original HDR image and the reconstructed HDR image. In embodiments of this application, a reconstruction loss of the HDR image can be obtained, thereby identifying a visible contour in the reconstructed HDR image.

S201: Generate a standard dynamic range SDR image based on an original high dynamic range HDR image

S202: Generate a reconstructed HDR image based on the original HDR image and the SDR image

S203: Determine image losses of a plurality of areas in the reconstructed HDR image based on the original HDR image and the reconstructed HDR image

S204: Determine, based on the image losses of the plurality of areas, an area that meets a loss threshold and an area that does not meet a loss threshold in the plurality of areas

S205: Generate the loss threshold based on information in the original HDR image

S206: Generate an image loss diagram

S207: Adjust a model parameter if the area that does not meet the loss threshold in the plurality of areas exceeds a preset proportion

S208: Return to and perform, based on the model parameter, the step of generating the reconstructed HDR image based on the HDR image and the SDR image

FIG. 2

Processed by Luminess, 75001 PARIS (FR)

## Description

This application claims priority to Chinese Patent Application No. 202410745724.2, filed with the China National Intellectual Property Administration on June 7, 2024 and entitled "METHOD FOR DETERMINING IMAGE LOSS AND RELATED APPARATUS", which is incorporated herein by reference in its entirety.

## TECHNICAL FIELD

This application relates to the field of image processing, and in particular, to a method for determining an image loss and a related apparatus.

## BACKGROUND

In the field of digital image processing, a high dynamic range (High Dynamic Range, HDR) image has attracted attention for a capability of capturing and displaying a wide luminance range in the real world. However, due to limitations in technologies and pieces of equipment, only a standard dynamic range (Standard Dynamic Range, SDR) image can be obtained. The image has a limited luminance range, and cannot fully display rich details of the real world. To overcome this limitation, a person skilled in the art proposes a method for reconstructing an HDR image by using an SDR image and a gain map. The gain map is a special image that records luminance gain information required for each pixel converted from the SDR image to the HDR image. The gain map may be considered as a two-dimensional matrix, where each element corresponds to a luminance gain value of a pixel in the SDR image.

In a process of reconstructing the HDR image, preprocessing, including operations such as denoising and contrast enhancement, needs to be performed on the SDR image, to improve image quality. Then, luminance of each pixel in the SDR image is adjusted based on the gain map. Specifically, for each pixel in the SDR image, a gain value at a corresponding position in the gain map is retrieved and applied to a luminance value of the pixel in the SDR image. In this way, a luminance-adjusted SDR image is obtained, and a luminance range of the luminance-adjusted SDR image has been extended to a luminance range of the HDR image. In the process of reconstructing the HDR image, color and details of the image usually need to be further optimized. Effect closer to that of the HDR image can be obtained by fusing the SDR image with the SDR image adjusted based on the gain map.

Although reconstructing an HDR image by using an SDR image and a gain map is an effective digital image processing technology, a gain map with a wide gain range or a low bit depth may introduce a loss in the restoration process, resulting in a visible contour (contour) in a final restored image. How to identify the visible contour is a technical problem being studied by a person skilled in the art.

## SUMMARY

Embodiments of this application disclose a method for determining an image loss and a related apparatus, to obtain a reconstruction loss of an HDR image, thereby identifying a visible contour in a reconstructed HDR image.

According to a first aspect, an embodiment of this application provides a method for determining an image loss. The method includes:

generating a standard dynamic range SDR image based on an original high dynamic range HDR image;
generating a reconstructed HDR image based on the original HDR image and the SDR image; and
determining image losses of a plurality of areas in the reconstructed HDR image based on the original HDR image and the reconstructed HDR image.

In the method, the SDR image and the reconstructed HDR image are sequentially obtained by performing a series of processing on the original HDR image. Then, the image loss is generated based on the original HDR image and the reconstructed HDR image. Subsequently, the image loss may serve as feedback to optimize and adjust an image processing procedure. Alternatively, the image loss may be used to evaluate a reconstruction process, for example, the image loss may be used to identify a visible contour in the reconstructed HDR image. Therefore, the image loss is conducive to determining an image state or improving image processing effect.

With reference to the first aspect, in a possible implementation of the first aspect, the plurality of areas include a plurality of pixels.

With reference to the first aspect, or in any possible implementation of the first aspect, in another possible implementation of the first aspect, the method further includes:
determining, based on the image losses of the plurality of areas, an area that meets a loss threshold and an area that does not meet a loss threshold in the plurality of areas, where the loss threshold is an estimated minimum value of image luminance that is capable of being perceived by naked eyes.

In other words, the image loss may be used to determine which area in the plurality of areas has acceptable reconstruction loss, determine which area has unacceptable reconstruction loss, and reflect reconstruction effect of the entire image. This facilitates appropriate optimization of a subsequent image processing procedure by users.

With reference to the first aspect, or in any possible implementation of the first aspect, in another possible implementation of the first aspect, the method further includes:
generating the loss threshold based on information in the original HDR image.

In other words, the loss threshold for evaluating whether the image loss meets a requirement is determined based on the original HDR image. That is, a loss threshold is specifically generated for each HDR image, rather than a fixed loss threshold. In this way, this calculated threshold is more pertinent when reconstruction effect of the reconstructed HDR image is evaluated. Therefore, a determining result is more accurate.

With reference to the first aspect, or in any possible implementation of the first aspect, in another possible implementation of the first aspect, the generating the loss threshold based on information in the original HDR image includes:
inputting parameter information in the original HDR image into a Barton's model, to generate the loss threshold, where the parameter information includes one or more of neural noise, lateral inhibition, photon noise, external noise, a limited integration capability, an optical modulation transfer function, orientation filtering, and temporal filtering.

It may be understood that, various factors of human contrast perception are considered via the Barten's model (Barten's model), which is equivalent to obtaining a loss threshold with higher accuracy by performing adjustment in an actual scenario.

With reference to the first aspect, or in any possible implementation of the first aspect, in another possible implementation of the first aspect, the inputting parameter information in the original HDR image into a Barton's model, to generate the loss threshold includes:
inputting personalized information and the parameter information in the original HDR image into the Barton's model, to generate the loss threshold, where the personalized information includes one or more of an age, a gender, a type, and visual acuity of a user group of the original HDR image.

It may be understood that, in this implementation, by incorporating characteristics of the original HDR image and a perception characteristic of the user group of the HDR image for image information, the generated loss threshold provides higher accuracy and better effectiveness in evaluating whether the user group accepts the image loss.

With reference to the first aspect, or in any possible implementation of the first aspect, in another possible implementation of the first aspect, the generating the loss threshold based on information in the original HDR image includes:
generating, through a Schreiber's model, the loss threshold by applying square root uniformity to a dark area of the original HDR image, and generating, through the Schreiber's model, the loss threshold by applying logarithmic uniformity to a bright area of the original HDR image.

It may be understood that, in this solution, a model may be used to basically describe a human contrast perception based on different visual characteristics of a human eye in a dark place and a bright place, which is faster in calculation and more practical.

With reference to the first aspect, or in any possible implementation of the first aspect, in another possible implementation of the first aspect, the method further includes:
generating an image loss diagram, where the loss diagram includes a plurality of areas whose distribution rule is the same as a distribution rule of the original HDR image, and in the plurality of areas of the loss diagram, a luminance value of an area that meets the loss threshold is marked as a first value; and a luminance value of an area that does not meet the loss threshold is marked as a second value.

It may be understood that, a user or a developer may visually view, via the loss diagram, an area in which the image loss meets a condition and an area in which the image loss does not meet a condition, so that the user quickly and accurately performs a subsequent related operation.

With reference to the first aspect, or in any possible implementation of the first aspect, in another possible implementation of the first aspect, the determining image losses of a plurality of areas in the HDR image based on the original HDR image and the reconstructed HDR image includes:

performing luminance conversion processing on the original HDR image, to obtain a first image;
performing luminance conversion processing on the reconstructed HDR image, to obtain a second image; and
determining the image luminance losses of the plurality of areas in the HDR image based on the first image and the second image.

With reference to the first aspect, or in any possible implementation of the first aspect, in another possible implementation of the first aspect, the determining image losses of a plurality of areas in the HDR image based on the original HDR image and the reconstructed HDR image includes:

> performing pixel value conversion processing on the original HDR image, to obtain a reference image;
> performing luminance conversion processing on the reference image, to obtain a first image;
> performing luminance conversion processing on the reconstructed HDR image, to obtain a second image; and
> determining the image luminance losses of the plurality of areas in the HDR image based on the first image and the second image.

In this way, pixel value conversion processing is first performed on the original HDR image, to obtain the reference image. Subsequently, an image loss between the reconstructed HDR image and the reference image is essentially determined. It can be better determined, based on the image loss, whether a transition occurs when luminance changes.

With reference to the first aspect, or in any possible implementation of the first aspect, in another possible implementation of the first aspect, the performing pixel value conversion processing on the original HDR image, to obtain a reference image includes:

performing one or more of the following:

> adding a first offset to an R value of each pixel in the original HDR image, to obtain a reference image;
> adding a second offset to a G value of each pixel in the original HDR image, to obtain a reference image;
> adding a third offset to a B value of each pixel in the original HDR image, to obtain a reference image;
> subtracting a first offset from the R value of each pixel in the original HDR image, to obtain a reference image;
> subtracting a second offset from the G value of each pixel in the original HDR image, to obtain a reference image; or
> subtracting a third offset from the B value of each pixel in the original HDR image, to obtain a reference image.

With reference to the first aspect, or in any possible implementation of the first aspect, in another possible implementation of the first aspect, the method further includes:

> adjusting a model parameter if the area that does not meet the loss threshold in the plurality of areas exceeds a preset proportion, where the model parameter includes a parameter used for generating the reconstructed HDR image based on the HDR image and the SDR image; and
> returning to and performing, based on the model parameter, the step of generating the reconstructed HDR image based on the HDR image and the SDR image.

It may be understood that the image loss being used as a basis for adjusting the model parameter is conducive to subsequently reconstructing an HDR image with better effect.

With reference to the first aspect, or in any possible implementation of the first aspect, in another possible implementation of the first aspect, the generating a reconstructed HDR image based on the original HDR image and the SDR image includes:

> generating a gain map based on the original HDR image and the SDR image; and
> generating the reconstructed HDR image based on the gain map and the SDR image.

It can be learned that the gain map is first generated in a process of reconstructing the HDR image. The gain map may be used to enhance a dynamic range of the SDR image, thereby obtaining effect of the HDR image.

According to a second aspect, an embodiment of this application provides an apparatus for determining an image loss. The apparatus includes:

> a first generation unit, configured to generate a standard dynamic range SDR image based on an original high dynamic range HDR image;
> a second generation unit, configured to generate a reconstructed HDR image based on the original HDR image and the SDR image; and
> a first determining unit, configured to determine image losses of a plurality of areas in the reconstructed HDR image based on the original HDR image and the reconstructed HDR image.

In the method, the SDR image and the reconstructed HDR image are sequentially obtained by performing a series of processing on the original HDR image. Then, the image loss is generated based on the original HDR image and the reconstructed HDR image. Subsequently, the image loss may serve as feedback to optimize and adjust an image processing procedure. Alternatively, the image loss may be used to evaluate a reconstruction process, for example, the image loss may be used to identify a visible contour in the reconstructed HDR image. Therefore, the image loss is conducive to determining an image state or improving image processing effect.

With reference to the second aspect, in a possible implementation of the second aspect, the plurality of areas include a plurality of pixels.

With reference to the second aspect, or any possible implementation of the second aspect, in another possible implementation of the second aspect, the apparatus further includes:
a second determining unit, configured to determine, based on the image losses of the plurality of areas, an area that meets a loss threshold and an area that does not meet a loss threshold in the plurality of areas, where the loss threshold is an estimated minimum value of image luminance that is capable of being perceived by naked eyes.

In other words, the image loss may be used to determine which area in the plurality of areas has acceptable reconstruction loss, determine which area has unacceptable reconstruction loss, and reflect reconstruction effect of the entire image. This facilitates appropriate optimization of a subsequent image processing procedure by users.

With reference to the second aspect, or any possible implementation of the second aspect, in another possible implementation of the second aspect, the apparatus further includes:
a third generation unit, configured to generate the loss threshold based on information in the original HDR image.

In other words, the loss threshold for evaluating whether the image loss meets a requirement is determined based on the original HDR image. That is, a loss threshold is specifically generated for each HDR image, rather than a fixed loss threshold. In this way, this calculated threshold is more pertinent when reconstruction effect of the reconstructed HDR image is evaluated. Therefore, a determining result is more accurate.

With reference to the second aspect, or any possible implementation of the second aspect, in another possible implementation of the second aspect, when the loss threshold is generated based on the information in the original HDR image, the third generation unit is specifically configured to:
input parameter information in the original HDR image into a Barton's model, to generate the loss threshold, where the parameter information includes one or more of neural noise, lateral inhibition, photon noise, external noise, a limited integration capability, an optical modulation transfer function, orientation filtering, and temporal filtering.

It may be understood that, various factors of human contrast perception are considered via the Barten's model (Barten's model), which is equivalent to obtaining a loss threshold with higher accuracy by performing adjustment in an actual scenario.

With reference to the second aspect, or any possible implementation of the second aspect, in another possible implementation of the second aspect, when the parameter information in the original HDR image is input into the Barton's model to generate the loss threshold, the third generation unit is specifically configured to:
input personalized information and the parameter information in the original HDR image into the Barton's model, to generate the loss threshold, where the personalized information includes one or more of an age, a gender, a type, and visual acuity of a user group of the original HDR image.

It may be understood that, in this implementation, by incorporating characteristics of the original HDR image and a perception characteristic of the user group of the HDR image for image information, the generated loss threshold provides higher accuracy and better effectiveness in evaluating whether the user group accepts the image loss.

With reference to the second aspect, or any possible implementation of the second aspect, in another possible implementation of the second aspect, when the loss threshold is generated based on the information in the original HDR image, the third generation unit is specifically configured to:
generate, through a Schreiber's model, the loss threshold by applying square root uniformity to a dark area of the original HDR image, and generate, through the Schreiber's model, the loss threshold by applying logarithmic uniformity to a bright area of the original HDR image.

It may be understood that, in this solution, a model may be used to basically describe a human contrast perception based on different visual characteristics of a human eye in a dark place and a bright place, which is faster in calculation and more practical.

With reference to the second aspect, or any possible implementation of the second aspect, in another possible implementation of the second aspect, the apparatus further includes:
a fourth generation unit, configured to generate an image loss diagram, where the loss diagram includes a plurality of areas whose distribution rule is the same as a distribution rule of the original HDR image, and in the plurality of areas of the loss diagram, a luminance value of an area that meets the loss threshold is marked as a first value; and a luminance value of an area that does not meet the loss threshold is marked as a second value.

It may be understood that, a user or a developer may visually view, via the loss diagram, an area in which the image loss meets a condition and an area in which the image loss does not meet a condition, so that the user quickly and accurately performs a subsequent related operation.

With reference to the second aspect, or any possible implementation of the second aspect, in another possible implementation of the second aspect, when the image losses of the plurality of areas in the HDR image are determined based on the original HDR image and the reconstructed HDR image, the first determining unit is specifically configured to:

perform luminance conversion processing on the original HDR image, to obtain a first image;
perform luminance conversion processing on the reconstructed HDR image, to obtain a second image; and
determine the image luminance losses of the plurality of areas in the HDR image based on the first image and the second image.

With reference to the second aspect, or any possible implementation of the second aspect, in another possible implementation of the second aspect, when the image losses of the plurality of areas in the HDR image are determined based on the original HDR image and the reconstructed HDR image, the first determining unit is specifically configured to:

perform pixel value conversion processing on the original HDR image, to obtain a reference image;
perform luminance conversion processing on the reference image, to obtain a first image;
perform luminance conversion processing on the reconstructed HDR image, to obtain a second image; and
determine the image luminance losses of the plurality of areas in the HDR image based on the first image and the second image.

In this way, pixel value conversion processing is first performed on the original HDR image, to obtain the reference image. Subsequently, an image loss between the reconstructed HDR image and the reference image is essentially determined. It can be better determined, based on the image loss, whether a transition occurs when luminance changes.
With reference to the second aspect, or any possible implementation of the second aspect, in another possible implementation of the second aspect, when pixel value conversion processing is performed on the original HDR image to obtain a reference image, the first determining unit is specifically configured to:
perform one or more of the following operations:

adding a first offset to an R value of each pixel in the original HDR image, to obtain a reference image;
adding a second offset to a G value of each pixel in the original HDR image, to obtain a reference image;
adding a third offset to a B value of each pixel in the original HDR image, to obtain a reference image;
subtracting a first offset from the R value of each pixel in the original HDR image, to obtain a reference image;
subtracting a second offset from the G value of each pixel in the original HDR image, to obtain a reference image; or
subtracting a third offset from the B value of each pixel in the original HDR image, to obtain a reference image.

With reference to the second aspect, or any possible implementation of the second aspect, in another possible implementation of the second aspect, the apparatus further includes:

an adjustment unit, configured to: adjust a model parameter if the area that does not meet the loss threshold in the plurality of areas exceeds a preset proportion, where the model parameter includes a parameter used for generating the reconstructed HDR image based on the HDR image and the SDR image; and
trigger the second generation unit to: return to and perform, based on the model parameter, the step of generating the reconstructed HDR image based on the HDR image and the SDR image.

It may be understood that the image loss being used as a basis for adjusting the model parameter is conducive to subsequently reconstructing an HDR image with better effect.
With reference to the second aspect, or any possible implementation of the second aspect, in another possible implementation of the second aspect, when the reconstructed HDR image is generated based on the original HDR image and the SDR image, the second generation unit is specifically configured to:

generate a gain map based on the original HDR image and the SDR image; and
generate the reconstructed HDR image based on the gain map and the SDR image.

It can be learned that the gain map is first generated in a process of reconstructing the HDR image. The gain map may be used to enhance a dynamic range of the SDR image, thereby obtaining effect of the HDR image.
According to a third aspect, an embodiment of this application provides an electronic device. The electronic device includes one or more processors and a memory. The memory is coupled to the one or more processors. The memory is configured to store computer programs. The one or more processors invoke the computer programs to enable the electronic device to perform the method in the first aspect or any possible implementation of the first aspect.
According to a fourth aspect, an embodiment of this application provides a chip system, where the chip system is applied to an electronic device. The chip system includes one or more processors, and the processor is configured to invoke computer programs to enable the electronic device to perform the method in the first aspect or any possible implementation of the first aspect.

According to a fifth aspect, an embodiment of this application provides a computer program product including instructions. When the computer program product is run on an electronic device, the electronic device is enabled to perform the method in the first aspect or any possible implementation of the first aspect.

According to a sixth aspect, an embodiment of this application provides a computer-readable storage medium. The computer-readable storage medium includes computer programs. When the computer programs run on an electronic device, the electronic device is enabled to perform the method in the first aspect or any possible implementation of the first aspect.

**BRIEF DESCRIPTION OF DRAWINGS**

The following describes accompanying drawings used in embodiments of this application.

FIG. 1 is a schematic diagram of a structure of an electronic device according to an embodiment of this application;
FIG. 2 is a schematic flowchart of a method for determining an image loss according to an embodiment of this application;
FIG. 3 is a schematic flowchart of reconstructing an HDR image according to an embodiment of this application;
FIG. 4 is a schematic diagram of effect of a reconstructed HDR image according to an embodiment of this application;
FIG. 5 is a schematic flowchart of a method for determining an image loss according to an embodiment of this application;
FIG. 6 is a schematic diagram of generating a reference image according to an embodiment of this application;
FIG. 7 is a schematic diagram of generating a reference image according to an embodiment of this application;
FIG. 8 is a schematic diagram of not generating a reference image according to an embodiment of this application;
FIG. 9 is a schematic flowchart of determining whether an image loss meets a loss threshold according to an embodiment of this application;
FIG. 10 is a schematic diagram of a relationship between a loss threshold and image luminance according to an embodiment of this application;
FIG. 11 is a loss diagram according to an embodiment of this application; and
FIG. 12 is a schematic diagram of a mechanism of an apparatus for determining an image loss according to an embodiment of this application.

**DESCRIPTION OF EMBODIMENTS**

The following describes embodiments of this application with reference to accompanying drawings in embodiments of this application.

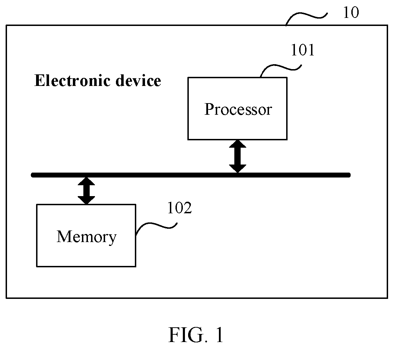

Refer to FIG. 1. FIG. 1 is a schematic diagram of a structure of an electronic device according to an embodiment of this application. An electronic device 10 may be a single device, or may be a device cluster formed by a plurality of devices. The electronic device 10 has a specific computing capability and can process an image. The electronic device 10 may be a cloud device (for example, a cloud server), or may be a local device.

An example in which the electronic device 10 is the local device is used. The electronic device 10 may be specifically a server, a computer, a handheld device (for example, a mobile phone, a tablet computer, or a personal digital assistant), a vehicle-mounted device (for example, an automobile, a bicycle, an electric vehicle, an aircraft, or a ship), a wearable device (for example, a smartwatch (for example, an iWatch), a smart band, or a pedometer), a smart home device (for example, a refrigerator, a television, an air conditioner, or an electricity meter), an intelligent robot, a workshop device, or the like. Any device that can perform image processing or meet a requirement can be used as the electronic device 10 in this application.

The electronic device 10 includes at least one or more processors 101, and further includes one or more memories 102. The processor 101 is connected to the memory 102 via a bus or in another manner.

The memory 102 stores computer programs, and the processor 101 is configured to read the computer programs in the memory 102, and then perform a method defined by the computer programs, thereby implementing an image processing function, for example, generating an SDR image based on an original HDR image, generating a gain map based on the original HDR image and the SDR image, and generating a reconstructed HDR image based on the SDR image and the gain map. Optionally, the computer programs may be invoked to further calculate a loss threshold, and evaluate, based on the loss threshold, whether an image loss meets a condition.

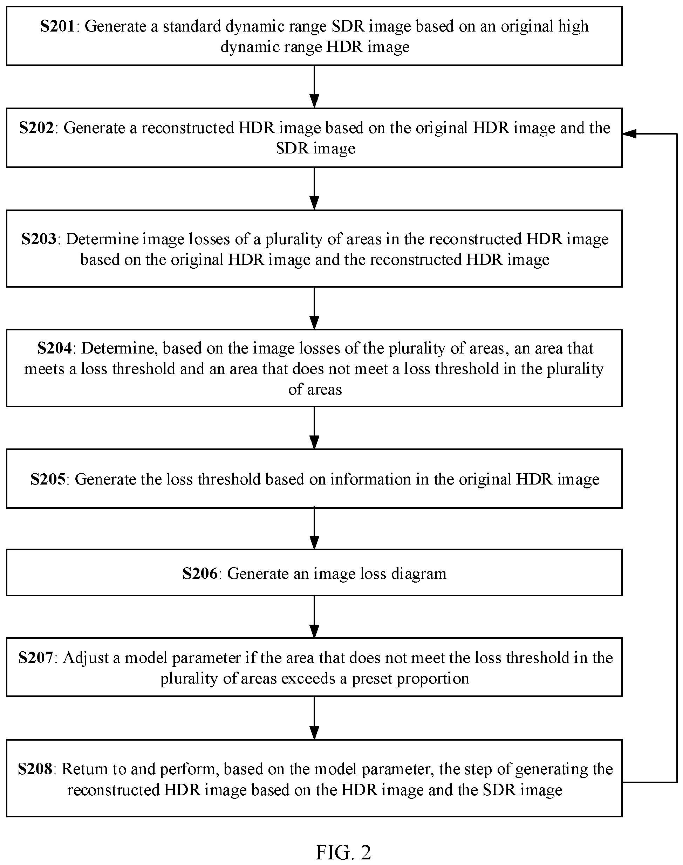

More specifically, the processor 101 may invoke the computer programs in the memory 102 to perform one or more of step S201 to step S208 in the method shown in FIG. 2.

The processor 101 may include a graphics processing unit GPU, or may include a central processing unit CPU, or may include other types of processors. Examples are not listed one by one herein. When there are a plurality of processors 101, the plurality of processors may be a same type of processors, or may be different types of processors. The processors may be integrated on a same chip, or may be integrated on separate chips. One processor may include one or more processing cores, and may be specifically configured according to a requirement.

In addition, the memory 102 further stores other data except the computer programs. The other data may include data required in a running process of the processor, for example, an original HDR image, and may further include data generated in the running process of the processor, for example, an SDR image, a gain map, a reconstructed HDR image, an image loss, metadata of a related image, and the like. Certainly, the other data may further include other data, which is not listed one by one herein.

The memory 102 generally includes a memory and an external memory. The memory may be a random access memory (RAM), a read-only memory (ROM), a cache (CACHE), or the like. The external memory may be a hard disk, an optical disk, a USB flash drive, a floppy disk, a tape drive, or the like. The computer programs are usually stored in the external memory, and the processor loads the computer programs from the external memory into the memory before executing processing. In this embodiment of this application, an input image (for example, an original HDR image) used in the running process of the processor may be stored in the external memory, and may be loaded to the memory when needing to be used.

In this embodiment of this application, the electronic device 10 may further include another component or module, for example, an audio input/output module, an image acquisition module (for example, a camera apparatus), an image output apparatus (for example, a display), a communication module (configured to receive or send related data), and an instruction input/an output module (for example, a keyboard or a touchscreen), and the like. The another component or module may be configured based on a specific use scenario.

Refer to FIG. 2. FIG. 2 is a schematic flowchart of a method for determining an image loss according to an embodiment of this application. The method may be implemented based on the electronic device 10 shown in FIG. 1, or may be implemented based on another architecture. The method includes but is not limited to the following steps.

**Step S201:** Generate a standard dynamic range SDR image based on an original high dynamic range HDR image.

Specifically, the SDR image may be generated based on the HDR image in various manners, for example, by using the following procedure: converting an HDR non-linear electrical signal into an HDR linear optical signal by using an electro-optical transfer function (Electro-Optical Transfer Function, EOTF), performing color space converting (Color Space Converting) on the HDR linear optical signal, for example, converting from BT.2020 to BT.709, converting the HDR linear optical signal into an SDR linear optical signal by performing tone mapping (Tone Mapping), and converting the SDR linear optical signal into an SDR nonlinear electrical signal by using an optical-electro transfer function (Optical-Electro Transfer Function, OETF). In this implementation procedure, the conversion from the HDR image to the SDR image involves compression of both a luminance dynamic range and color space. For example, a luminance range is compressed from [0.0005, 10000] nit to [0.1, 100] nit, and the color space is converted from BT.2020 to BT.709. In addition, a color bit depth is decreased from 10 bits to 8 bits; and the number of available gradation levels in a video signal is decreased from 1024 to 256, which is a 75% reduction. Furthermore, the electro-optical transfer function EOTF is also changed from either perceptual quantization (Perceptual Quantization, PQ) or hybrid log-gamma (Hybrid Log-Gamma, HLG) to a BT.709 Gamma function.

In this embodiment of this application, the HDR image may also be referred to as a pre-enhanced image, and the SDR image may also be referred to as a basic image. It should be noted that there are various manners for converting the HDR image into the SDR image, which is not listed one by one herein.

**Step S202:** Generate a reconstructed HDR image based on the original HDR image and the SDR image.

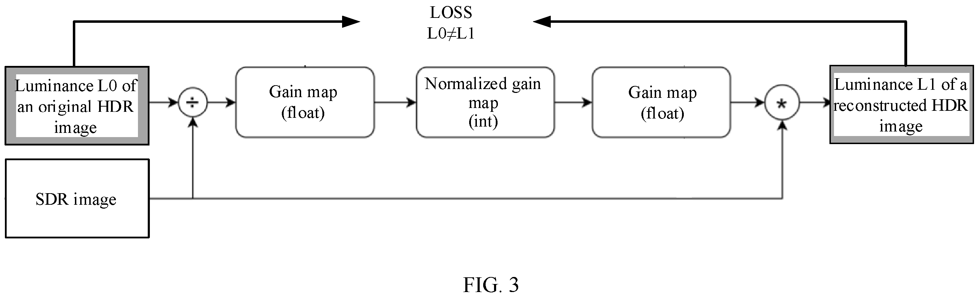

Specifically, the HDR image may be reconstructed based on the SDR image. In a reconstruction process, some pieces of information in the original HDR image are used as reference information or constraints for reconstruction. Optionally, as shown in FIG. 3, a specific implementation may include the following operations: generating a gain map (Gainmap) based on the original HDR image and the SDR image, optionally, generating a floating-point gain map Gainmap (float) based on the original HDR image and the SDR image, converting the floating-point gain map Gainmap (float) into an integer gain map NormalizeGainmap (int), that is, converting the floating-point type into the integer type: float 32 =>int 8, converting the integer gain map NormalizeGainmap (int) into the floating-point gain map Gainmap (float), that is, converting the integer type into the floating-point type: int 8 => float 32, to obtain a final gain map, and generating the reconstructed HDR image based on the gain map and the SDR image. Optionally, in this process, the gain map may be used to enhance a dynamic range of the SDR image, to obtain effect of the HDR image.

Optionally, the following provides an example of a formula for generating the gain map Gainmap:

$$Gainmap = \log_2 \left( \frac{Alternate + k_{alternate}}{Baseline + k_{baseline}} \right) \qquad \text{Formula (1-1)}$$

where Alternate represents linear spatial luminance of the HDR image, Baseline represents linear spatial luminance of the SDR image, $K_{alternate}$ represents a linear spatial offset of the HDR image, and $K_{baseline}$ represents a linear spatial offset of the SDR image.

**Step S203:** Determine image losses of a plurality of areas in the reconstructed HDR image based on the original HDR image and the reconstructed HDR image.

As shown in FIG. 3, comparison calculation is performed between the reconstructed HDR image and the original HDR image, to determine the image loss of the plurality of areas in the reconstructed HDR image. Optionally, the plurality of areas herein include a plurality of pixels, that is, the areas are divided by using a pixel as a granularity. Optionally, the plurality of areas herein include a plurality of pixel sets, that is, the areas are divided by using a pixel set as a granularity. Each pixel set includes a plurality of pixels, and a quantity of pixels included in the pixel set may be pre-configured based on a requirement and an application scenario. This is not limited herein.

Optionally, the image loss herein may include loss of one or more of factors such as luminance, chrominance, and contrast.

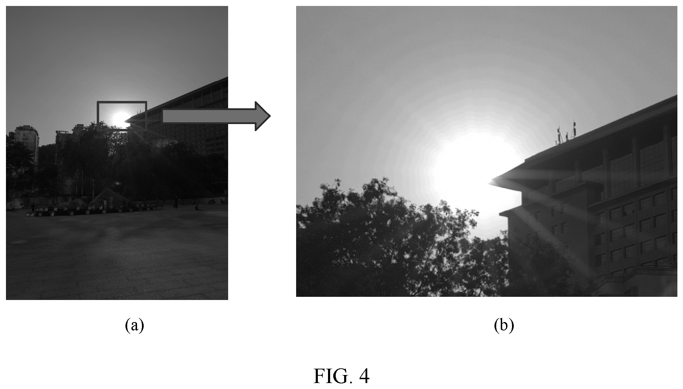

As shown in FIG. 4, part (a) shows the reconstructed HDR image, part (b) is a partial enlarged view of the reconstructed HDR image. It can be faintly seen from part (b) that there is a black-and-white wave line near a sun, which is caused by an image loss (for example, an image luminance loss) in a process of reconstructing the HDR image, and the image loss may be obtained through calculation.

For ease of understanding, the following provides several examples of manners of determining the image loss.

**Case 1:** The determining image losses of a plurality of areas in the HDR image based on the original HDR image and the reconstructed HDR image includes the following steps.

**Step 1:** Perform luminance conversion processing on the original HDR image, to obtain a first image, where the first image focuses on a luminance value of each area of the plurality of areas included in the original HDR image. In this embodiment of this application, there are various specific algorithms for luminance conversion processing. For ease of understanding, the following provides an example for description. For example, an HDR image with different color gamuts is used as an example, when luminance L = a * R + b * G + c * B of each area in the first image is converted into the first image, a luminance calculation formula of each area (the pixel is used as an example) in the first image may be as follows:

$$sRGB(R, G, B): 0.2127 * R + 0.7151 * G + 0.0721 * B \qquad \text{Formula (1-2)}$$

$$P3(R, G, B): 0.2290 * R + 0.6917 * G + 0.0793 * G \qquad \text{Formula (1-3)}$$

$$Rec2020(R, G, B): 0.2627 * R + 0.6780 * G + 0.0593 * B \qquad \text{Formula (1-4)}$$

sRGB(R, G, B), P3(R, G, B), and Rec2020(R, G, B) respectively represent three different color gamuts, R represents a red red value of the pixel, G represents a green green value of the pixel, and B represents a blue blue value of the pixel.

**Step 2:** Perform luminance conversion processing on the reconstructed HDR image, to obtain a second image, where the second image focuses on a luminance value of each of the plurality of areas included in the reconstructed HDR image. A principle of luminance conversion is the same as a principle of step 1. A generation order of the first image and the second image may be parallel or sequential. This is not specifically limited herein.

**Step 3:** Determine image luminance losses of the plurality of areas in the HDR image based on the first image and the second image.

It should be noted that the original HDR image, the SDR image, the reconstructed HDR image, the first image, the second image, and the subsequent reference image each include a plurality of areas, for example, each include 1,024 areas. If the 1,024 areas are sorted according to a same rule, a relative position of an $i^{th}$ area of an image 1 in the image 1 is the same as an absolute position of an $i^{th}$ area of an image 2 in the image 2, and i is any value from 1 to 1024. The image 1 and the image 2 refer to any two images of the original HDR image, the SDR image, the reconstructed HDR image, the first image, the second image, and the subsequent reference image. That is, the images include a plurality of areas having a same distribution rule. Therefore, when the luminance loss is determined, same areas of the first image and the second image are compared. A plurality of areas indicate a plurality of comparison results, namely, image luminance losses respectively corresponding to the plurality of areas.

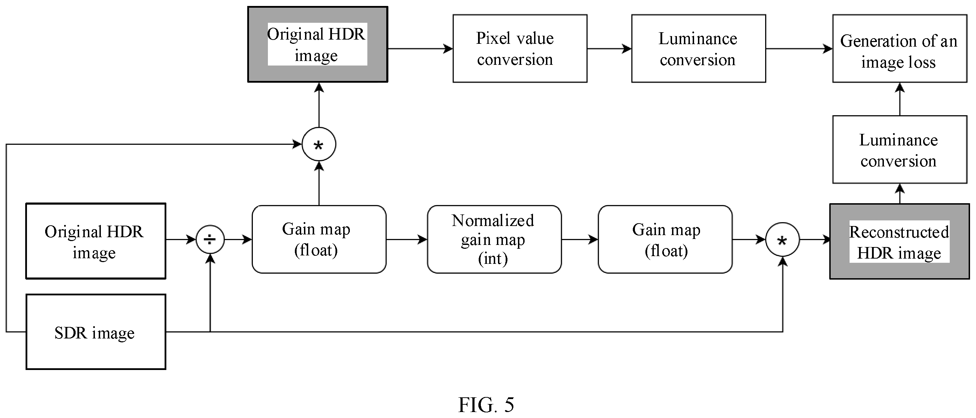

**Case 2:** The determining image losses of a plurality of areas in the HDR image based on the original HDR image and the reconstructed HDR image includes the following steps. FIG. 5 is a corresponding schematic flowchart.

**Step 0:** Perform pixel value conversion processing on the original HDR image, to obtain a reference image.

For example, one or more of the following operations (which may be referred to as "adjacent derivation" operations) may be performed during pixel value conversion processing:

Operation 1: adding a first offset $\triangle 1$ to an R value of each pixel in the original HDR image, to obtain a reference image.

Operation 2: adding a second offset $\triangle 2$ to a G value of each pixel in the original HDR image, to obtain a reference image.

Operation 3: adding a third offset $\triangle 3$ to a B value of each pixel in the original HDR image, to obtain a reference image.

Operation 4: subtracting a first offset $\triangle 1$ from the R value of each pixel in the original HDR image, to obtain a reference image.

Operation 5: subtracting a second offset $\triangle 2$ from the G value of each pixel in the original HDR image, to obtain a reference image.

Operation 6: subtracting a third offset $\triangle 3$ from the B value of each pixel in the original HDR image, to obtain a reference image.

Therefore, in this case, one reference image or a plurality of reference images may be obtained. The first offset $\triangle 1$, the second offset $\triangle 2$, and the third offset $\triangle 3$ may be three different offsets, or may be a same offset. Optionally, the first offset $\triangle 1$, the second offset $\triangle 2$, and the third offset $\triangle 3$ may be minimum value units of the R value, the G value, and the B value, respectively, or may be an integer multiple of a minimum value unit. Specific values may be determined based on an actual scenario requirement, and are not limited herein.

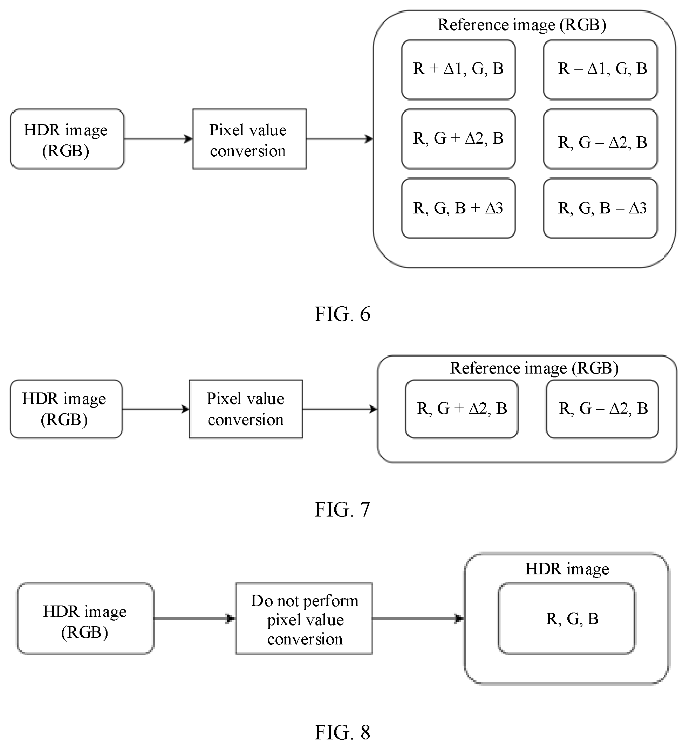

FIG. 6 shows a case in which six reference images are correspondingly obtained by performing all the six operations.

FIG. 7 shows a case in which two reference images are correspondingly obtained by performing the operation 2 and the operation 5.

FIG. 8 shows a case in which none of the six operations is performed, and the reference image does not need to be obtained, corresponding to Case 1.

It should be noted that, when the plurality of reference images are generated, subsequent step 1 to step 3 need to be performed once for each reference image. Therefore, for each reference image, corresponding image luminance losses of the plurality of areas in the reconstructed HDR image may be obtained.

**Step 1:** Perform luminance conversion processing on the reference image, to obtain a first image.

For details, refer to step 1 in Case 1. A difference lies in that step 1 in Case 1 is to extract the luminance value from the original HDR image, to obtain the first image, while this step is to extract the luminance value from the reference image, to obtain the first image. Principles of the two steps are the same, which are not described herein again.

**Step 2:** Perform luminance conversion processing on the reconstructed HDR image, to obtain a second image.

For details, refer to step 2 in Case 1.

**Step 3:** Determine the image luminance losses of the plurality of areas in the HDR image based on the first image and the second image.

For details, refer to step 3 in Case 1.

It should be noted that, in this embodiment of this application, how to specifically use the image loss after the image loss is determined is not limited herein. The image loss may be used to adjust a parameter of a related model, or determine some pieces of information required by a corresponding application scenario.

**Optionally, in this embodiment of this application, the method may further include one or more of S204 to S208.**

**Step S204:** Determine, based on the image losses of the plurality of areas, an area that meets a loss threshold and an area that does not meet a loss threshold in the plurality of areas.

The loss threshold is an estimated minimum value of image luminance that is capable of being perceived by naked eyes. A value predicted using an estimated algorithm is not limited herein. A value predicted using the estimation algorithm may have an error. However, although there is the error, the value is relatively close to a minimum value of image luminance that is capable of being actually perceived by the naked eyes.

Further, a result, in which the area that meets the loss threshold and the area that does not meet the loss threshold are determined based on the loss threshold, may be used as a basis for performing some operations, for example, used to optimize a related algorithm and a model for reconstructing the HDR image, or used to evaluate reconstruction effect of the reconstructed HDR image, and the like. In general, what the result is specifically used for is not limited herein.

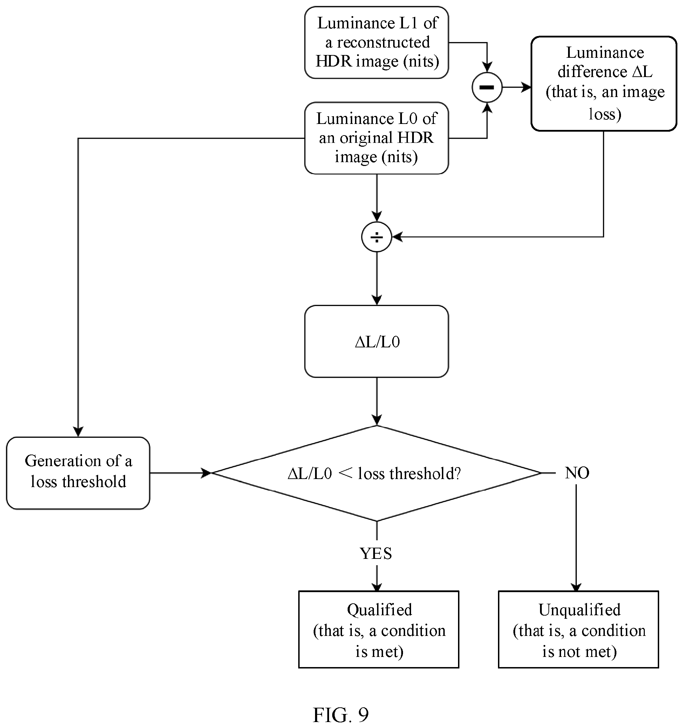

FIG. 9 shows a schematic flowchart of determining whether an image loss corresponding to each area meets the loss threshold.

**Step S205:** Generate the loss threshold based on the information in the original HDR image.

Specifically, the loss threshold may be generated based on the information in the original HDR image, as shown in generation of the loss threshold in FIG. 9.

**For example, Solution 1:** Input parameter information in the original HDR image into a Barten's model (Barten's model), to generate the loss threshold, where the parameter information includes one or more of neural noise, lateral inhibition, photon noise, external noise, a limited integration capability, an optical modulation transfer function, orientation filtering, and temporal filtering. For different HDR images, human perception may be different. Therefore, in this embodiment of this application, a specific loss threshold is generated for a specific HDR image. It may be understood that, for different original HDR images, loss thresholds generated for the different original HDR images are usually different. It may be understood that, various factors of human contrast perception are considered via the Barten's model, which is equivalent to obtaining a loss threshold with higher accuracy by performing adjustment in an actual scenario.

For ease of understanding, the following provides an example of an algorithm for calculating a loss threshold C:

$$C = 1/\text{CSF}(X_0, u, L) \times 2 \times 1 / 0.64 \qquad\qquad \text{Formula (2-1)}$$

$$\text{CSF}(X_0, u, L) = \frac{1}{m_t} = \frac{M_{opt}(u)/k}{\sqrt{\frac{2}{T}(\frac{1}{X_0^2} + \frac{1}{X_{max}^2} + \frac{u^2}{N_{max}^2})(\frac{1}{\eta p E} + \frac{\Phi_0}{1 - e^{-(u/u_0)^2}})}} \qquad\qquad \text{Formula (2-2)}$$

$$M_{opt}(u) = e^{-2\pi^2 \sigma^2 u^2} \qquad\qquad \text{Formula (2-3)}$$

$$\sigma = \sqrt{\sigma_0^2 + (C_{ab}d)^2} \qquad\qquad \text{Formula (2-4)}$$

$$d = 5 - 3\tanh(0.4\log(LX_0^2/40^2)) \qquad\qquad \text{Formula (2-5)}$$

$$E = \frac{\pi d^2}{4} L(1 - (d/9.7)^2 + (d/12.4)^4) \qquad\qquad \text{Formula (2-6)}$$

$$k = 3.0 \qquad\qquad \text{Formula (2-7)}$$

$$\sigma_0 = 0.5 \text{arc min} \qquad\qquad \text{Formula (2-8)}$$

$$C_{ab} = 0.08 \text{arc min/mm} \qquad\qquad \text{Formula (2-9)}$$

$$T = 0.1 \text{sec} \qquad\qquad \text{Formula (2-10)}$$

$$X_{max} = 12° \qquad\qquad \text{Formula (2-11)}$$

$$N_{max} = 15 \text{cycles} \qquad\qquad \text{Formula (2-12)}$$

$$\eta = 0.03 \qquad\qquad \text{Formula (2-13)}$$

$$\Phi_0 = 3 \times 10^{-8} \text{secdeg}^2 \qquad\qquad \text{Formula (2-14)}$$

$$u_0 = 7 \text{cycles/deg} \qquad\qquad \text{Formula (2-15)}$$

$$p = 1.2 \times 10^6 \text{photons/sec/deg}^2/\text{Td} \qquad\qquad \text{Formula (2-16)}$$

In the foregoing formulas, arc min represents arcminutes, arc min/mm represents arcminutes per millimeter, sec represents seconds, cycles represents cycles, secdeg$^2$ represents seconds per square degree, cycles/deg represents cycles per degree, and photons/ sec/deg$^2$/Td represents photons per second per square degree per Troland.

In the foregoing formulas, $\sigma$ represents a radial standard deviation of an optical point spread function of the human eye, $M_{opt}$ represents a contrast equation established at a spatial frequency, d represents a pupil diameter of the human eye, E represents luminance proportional to retinal illuminance, L represents incident luminance of the image, u represents the most sensitive spatial frequency obtained by searching based on the incident luminance L, k represents a signal-to-noise ratio, Sigma_0 represents a size value of a small pupil, C_ab represents a lens aberration constant, Cab represents a lens aberration constant, X_max represents a maximum angular size of the eye, in units of degrees of an integration area in an x-direction, N_max represents a maximum quantity of cycles that the eye can integrate, over which the eye can integrate information, n represents quantum detection efficiency of the eye, phi_0 represents spectral density of neural noise, u_0 represents a spatial frequency threshold, which is the limit of the spatial frequency for a lateral inhibition process, where beyond this threshold, lateral inhibition ceases, p represents a photon conversion factor which depends on a light source, and X_0 represents an angle of an object in the x-direction, measured in degrees of the object in the x-direction, where X_0 = 60°.

Optionally, when the loss threshold is generated, in addition to the information in the original HDR image, personalized information may also be used as follows: inputting personalized information and the parameter information in the original HDR image into the Barton's model, to generate the loss threshold, where the personalized information includes one or more of an age, a gender, a type, and visual acuity of a user group of the original HDR image. It may be understood that perceptions of images and luminance of the images of different user groups are usually different. Therefore, a major user group in an application scenario of the present invention may be first determined. Then, pieces of information such as an age, a gender, a type, and a vision of the major user group are taken as consideration factors for generating the loss threshold. In this way, the generated loss threshold can better meet personalized requirements of the major user group.

**For another example, Solution 2:** Generate (or calculate), through a Schreiber's model (Schreiber's Model), the loss threshold by applying square root uniformity to a dark area of the original HDR image, and generating, through the Schreiber's model, the loss threshold by applying logarithmic uniformity to a bright area of the original HDR image. For example, the loss threshold for the dark area of the original HDR image is generated by using a square root model (DeVires-Rose), and the loss threshold for the bright area of the original HDR image is generated by using a log-uniform model (Weber-Fechner). It may be understood that, in this solution, a model may be used to basically describe a human contrast perception based on different visual characteristics of a human eye in a dark place and a bright place, which is faster in calculation and more practical.

For ease of understanding, the following provides an example of an algorithm for calculating a loss threshold C.

$$C = \begin{cases} L > 1: 0.02 \\ L < 1: 0.02 \left( \frac{1}{(L)^{0.3}} \right) \end{cases} \qquad \text{Formula (3-1)}$$

L represents luminance of an area (for example, a pixel) of the original HDR image, and a corresponding loss threshold C obtained through calculation is also a loss threshold corresponding to the area (for example, the pixel).

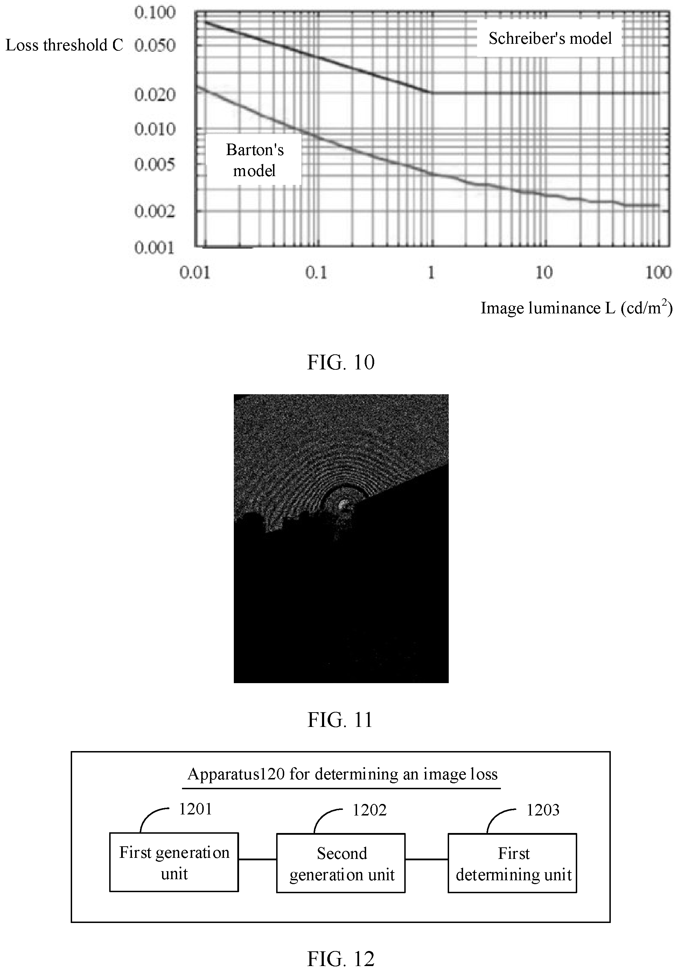

FIG. 10 shows a correlation relationship between a loss threshold C and image luminance L in Solution 1 and Solution 2.

**Step S206:** Generate an image loss diagram.

The loss diagram includes a plurality of areas whose distribution rule is the same as a distribution rule of the original HDR image, and in the plurality of areas (for example, with same dimensions and specifications) of the loss diagram, a luminance value of an area that meets the loss threshold is marked as a first value; and a luminance value of an area that does not meet the loss threshold is marked as a second value. In this way, a user can intuitively view, according to the loss diagram, an area whose image loss (for example, the image luminance loss) meets a requirement and an area whose image loss (for example, the image luminance loss) meets a requirement in the reconstructed HDR. As shown in FIG. 11, the black area meets the requirement, and a white area does not meet the requirement. FIG. 11 is merely an optional schematic manner, or another schematic manner may be used.

**Step S207:** Adjust a model parameter if the area that does not meet the loss threshold in the plurality of areas exceeds a preset proportion.

The model parameter includes a parameter used for generating the reconstructed HDR image based on the HDR image and the SDR image.

Specifically, the proportion threshold may be 0 or a value greater than 0. For example, when the proportion threshold is 0, it indicates that the model parameter needs to be adjusted as long as an image loss of an area in the plurality of areas does not meet the loss threshold (that is, not less than the loss threshold). For another example, when the proportion threshold is 0.5, it indicates that the model parameter needs to be adjusted as long as image losses of half of the plurality of areas do not meet the loss threshold (that is, not less than the loss threshold). A value of the proportion threshold may be configured based on an actual scenario, and is not limited herein.

The following provides an example for adjusting the model parameter:

After the reconstruction process of the HDR image and causes of the loss are analyzed, the following information is obtained:

Root cause of the loss: An HDR reconstruction loss mainly originates from a process in which a high-precision floating-point gain map Gainmap or an integer gain map Gainmap is saved as a low-precision fixed-point integer gain map Gainmap.

Examples of the loss:

Gain map Gainmap converted from a floating-point type to an integer type: float 32 =>int 8; and
Gain map Gainmap converted from an integer type to an integer type: int 16 =>int 8.

Role of the loss: After the loss is detected, it indicates that the reconstructed HDR image has a specific quality problem compared with the original HDR image. This causes poor user experience in a browsing process. Therefore, if the loss is detected or the area that does not meet the loss threshold in the plurality of areas exceeds the preset proportion, the model parameter is adjusted, to regenerate or calculate data of the gain map Gainmap, thereby reducing or avoiding the loss. For example:

Case 1: Increase a bit width of an image in the Gainmap, for example, from 8-bit to 10-bit or higher, to avoid the loss during conversion.

Case 2: Reduce a gain range of the Gainmap. By rescaling the Gainmap, the gain range of the Gainmap is close to 1, approximating the effect of the SDR image. In this way, the loss can be reduced. For example, Reconstructed HDR image = SDR * Gainmap (float, > 0), where when the gain map is closer to 1, the reconstructed HDR image is closer to the SDR image, thereby approximating the original HDR image. Therefore, the loss becomes smaller. A scaling factor $\alpha$ less than 1 is introduced, where Reconstructed HDR image = $\alpha$ * SDR * Gainmap. The purpose of reducing the loss can be achieved by reducing a value of $\alpha$.

**Step S208:** Return to and perform, based on the model parameter, the step of generating the reconstructed HDR image based on the HDR image and the SDR image.

Specifically, after the model parameter is optimized, step S202 is re-performed based on the optimized model parameter.

In the method described in FIG. 2, the SDR image and the reconstructed HDR image are sequentially obtained by performing a series of processing on the original HDR image. Then, the image loss is generated based on the original HDR image and the reconstructed HDR image. Subsequently, the image loss may serve as feedback to optimize and adjust an image processing procedure. Alternatively, the image loss may be used to evaluate a reconstruction process, for example, the image loss may be used to identify a visual contour in the reconstructed HDR image. Therefore, the image loss is conducive to determining an image state or improving image processing effect.

The foregoing describes the method in the embodiment of this application in detail above. The following provides an apparatus in an embodiment of this application.

Refer to FIG. 12. FIG. 12 is a schematic diagram of a structure of an apparatus for determining an image loss according to an embodiment of this application. An apparatus 120 for determining an image loss may be the foregoing electronic device 10, or may be a component or module in the electronic device 10. The apparatus 120 for determining an image loss may include a first generation unit 1201, a second generation unit 1202, and a first determining unit 1203, where detailed description of each unit is as follows:

The first generation unit 1201 is configured to generate a standard dynamic range SDR image from an original high dynamic range HDR image.

The second generation unit 1202 is configured to generate a reconstructed HDR image based on the original HDR image and the SDR image.

The first determining unit 1203 is configured to determine image losses of a plurality of areas in the reconstructed HDR image based on the original HDR image and the reconstructed HDR image.

In the method, the SDR image and the reconstructed HDR image are sequentially obtained by performing a series of processing on the original HDR image. Then, the image loss is generated based on the original HDR image and the reconstructed HDR image. Subsequently, the image loss may serve as feedback to optimize and adjust an image processing procedure. Alternatively, the image loss may be used to evaluate a reconstruction process, for example, the image loss may be used to identify a visible contour in the reconstructed HDR image. Therefore, the image loss is conducive to determining an image state or improving image processing effect.

In a possible implementation, the plurality of areas include a plurality of pixels.

In another possible implementation, the apparatus further includes:

a second determining unit, configured to determine, based on the image losses of the plurality of areas, an area that meets a loss threshold and an area that does not meet a loss threshold in the plurality of areas, where the loss threshold is an estimated minimum value of image luminance that is capable of being perceived by naked eyes.

In other words, the image loss may be used to determine which area in the plurality of areas has acceptable reconstruction loss, determine which area has unacceptable reconstruction loss, and reflect reconstruction effect of the entire image. This facilitates appropriate optimization of a subsequent image processing procedure by users.

In another possible implementation, the apparatus further includes:

a third generation unit, configured to generate the loss threshold based on information in the original HDR image.

In other words, the loss threshold for evaluating whether the image loss meets a requirement is determined based on the original HDR image. That is, a loss threshold is specifically generated for each HDR image, rather than a fixed loss threshold. In this way, this calculated threshold is more pertinent when reconstruction effect of the reconstructed HDR image is evaluated. Therefore, a determining result is more accurate.

In another possible implementation, when the loss threshold is generated based on the information in the original HDR image, the third generation unit is specifically configured to:

input parameter information in the original HDR image into a Barton's model, to generate the loss threshold, where the parameter information includes one or more of neural noise, lateral inhibition, photon noise, external noise, a limited integration capability, an optical modulation transfer function, orientation filtering, and temporal filtering.

It may be understood that, various factors of human contrast perception are considered via the Barten's model (Barten's model), which is equivalent to obtaining a loss threshold with higher accuracy by performing adjustment in an actual scenario.

In another possible implementation, when the parameter information in the original HDR image is input into the Barton's model to generate the loss threshold, the third generation unit is specifically configured to:

input personalized information and the parameter information in the original HDR image into the Barton's model, to generate the loss threshold, where the personalized information includes one or more of an age, a gender, a type, and visual acuity of a user group of the original HDR image.

It may be understood that, in this implementation, by incorporating characteristics of the original HDR image and a perception characteristic of the user group of the HDR image for image information, the generated loss threshold provides higher accuracy and better effectiveness in evaluating whether the user group accepts the image loss.

In another possible implementation, when the loss threshold is generated based on the information in the original HDR image, the third generation unit is specifically configured to:

generate, through a Schreiber's model, the loss threshold by applying square root uniformity to a dark area of the original HDR image, and generate, through the Schreiber's model, the loss threshold by applying logarithmic uniformity to a bright area of the original HDR image.

It may be understood that, in this solution, a model may be used to basically describe a human contrast perception based on different visible characteristics of a human eye in a dark place and a bright place, which is faster in calculation and more practical.

In another possible implementation, the apparatus further includes:

a fourth generation unit, configured to generate an image loss diagram, where the loss diagram includes a plurality of areas whose distribution rule is the same as a distribution rule of the original HDR image, and in the plurality of areas of the loss diagram, a luminance value of an area that meets the loss threshold is marked as a first value; and a luminance value of an area that does not meet the loss threshold is marked as a second value.

It may be understood that, a user or a developer may visually view, via the loss diagram, an area in which the image loss meets a condition and an area in which the image loss does not meet a condition, so that the user quickly and accurately performs a subsequent related operation.

In another possible implementation, when the image losses of the plurality of areas in the HDR image are determined based on the original HDR image and the reconstructed HDR image, the first determining unit is specifically configured to:

perform luminance conversion processing on the original HDR image, to obtain a first image;
perform luminance conversion processing on the reconstructed HDR image, to obtain a second image; and
determine the image luminance losses of the plurality of areas in the HDR image based on the first image and the second image.

In another possible implementation, when the image losses of the plurality of areas in the HDR image are determined based on the original HDR image and the reconstructed HDR image, the first determining unit is specifically configured to:

perform pixel value conversion processing on the original HDR image, to obtain a reference image;
perform luminance conversion processing on the reference image, to obtain a first image;
perform luminance conversion processing on the reconstructed HDR image, to obtain a second image; and
determine the image luminance losses of the plurality of areas in the HDR image based on the first image and the second image.

In this way, pixel value conversion processing is first performed on the original HDR image, to obtain the reference image. Subsequently, an image loss between the reconstructed HDR image and the reference image is essentially determined. It can be better determined, based on the image loss, whether a transition occurs when luminance changes.

In another possible implementation, when pixel value conversion processing is performed on the original HDR image to obtain a reference image, the first determining unit is specifically configured to:

perform one or more of the following operations:

adding a first offset to an R value of each pixel in the original HDR image, to obtain a reference image;
adding a second offset to a G value of each pixel in the original HDR image, to obtain a reference image;
adding a third offset to a B value of each pixel in the original HDR image, to obtain a reference image;
subtracting a first offset from the R value of each pixel in the original HDR image, to obtain a reference image;
subtracting a second offset from the G value of each pixel in the original HDR image, to obtain a reference image; or
subtracting a third offset from the B value of each pixel in the original HDR image, to obtain a reference image.

In another possible implementation, the apparatus further includes:

an adjustment unit, configured to: adjust a model parameter if the area that does not meet the loss threshold in the plurality of areas exceeds a preset proportion, where the model parameter includes a parameter used for generating the reconstructed HDR image based on the HDR image and the SDR image; and
trigger the second generation unit to: return to and perform, based on the model parameter, the step of generating the reconstructed HDR image based on the HDR image and the SDR image.

It may be understood that the image loss being used as a basis for adjusting the model parameter is conducive to subsequently reconstructing an HDR image with better effect.

In another possible implementation, when the reconstructed HDR image is generated based on the original HDR image and the SDR image, the second generation unit is specifically configured to:

generate a gain map based on the original HDR image and the SDR image; and
generate the reconstructed HDR image based on the gain map and the SDR image.

It can be learned that the gain map is first generated in a process of reconstructing the HDR image. The gain map may be used to enhance a dynamic range of the SDR image, thereby obtaining effect of the HDR image.

It should be noted that, for implementation of each unit, refer to corresponding description in the method embodiment shown in FIG. 2.

An embodiment of this application further provides a chip system. The chip system includes at least one processor, a memory, and an interface circuit. The memory, the transceiver, and the at least one processor are interconnected by using a line, and the at least one memory stores computer programs. When the computer program is executed by the processor, the method procedure shown in FIG. 2 is implemented.

An embodiment of this application further provides a computer-readable storage medium. The computer-readable storage medium stores computer programs. When the computer-readable storage medium runs on a processor, the method procedure shown in FIG. 2 is implemented.

An embodiment of this application further provides a computer program product. When the computer program product is run on a processor, the method procedure shown in FIG. 2 is implemented.

In conclusion, in this embodiment of this application, the SDR image and the reconstructed HDR image are sequentially obtained by performing a series of processing on the original HDR image. Then, the image loss is generated based on the original HDR image and the reconstructed HDR image. Subsequently, the image loss may serve as feedback to optimize and adjust an image processing procedure. Alternatively, the image loss may be used to evaluate a reconstruction process, for example, the image loss may be used to identify a visible contour in the reconstructed HDR image. Therefore, the image loss is conducive to determining an image state or improving image processing effect.

A person of ordinary skill in the art may understand that all or some of the procedures of the methods in embodiments are implemented. The procedures may be completed by a computer program instructing related hardware. The program may be stored in a computer-readable storage medium. When the program is executed, the procedures in the foregoing method embodiments may be included. The foregoing storage medium includes: various media that may store computer program code, for example, a ROM, a random access memory RAM, a magnetic disk, or an optical disk.

**Claims**

1. A method for determining an image loss, comprising:

   generating a standard dynamic range SDR image based on an original high dynamic range HDR image;
   generating a reconstructed HDR image based on the original HDR image and the SDR image; and
   determining image losses of a plurality of areas in the reconstructed HDR image based on the original HDR image and the reconstructed HDR image.

2. The method according to claim 1, wherein the plurality of areas comprise a plurality of pixels.

3. The method according to claim 1 or 2, further comprising:
   determining, based on the image losses of the plurality of areas, an area that meets a loss threshold and an area that does not meet a loss threshold in the plurality of areas, wherein the loss threshold is an estimated minimum value of image luminance that is capable of being perceived by naked eyes.

4. The method according to any one of claims 1 to 3, further comprising:
   generating the loss threshold based on information in the original HDR image.

5. The method according to claim 4, wherein the generating the loss threshold based on information in the original HDR image comprises:
   inputting parameter information in the original HDR image into a Barton's model, to generate the loss threshold, wherein the parameter information comprises one or more of neural noise, lateral inhibition, photon noise, external noise, a limited integration capability, an optical modulation transfer function, orientation filtering, and temporal filtering.

6. The method according to claim 5, wherein the inputting parameter information in the original HDR image into a Barton's model, to generate the loss threshold comprises:
   inputting personalized information and the parameter information in the original HDR image into the Barton's model, to generate the loss threshold, wherein the personalized information comprises one or more of an age, a gender, a type, and visual acuity of a user group of the original HDR image.

7. The method according to claim 4, wherein the generating the loss threshold based on information in the original HDR image comprises:
   generating, through a Schreiber's model, the loss threshold by applying square root uniformity to a dark area of the original HDR image, and generating, through the Schreiber's model, the loss threshold by applying logarithmic uniformity to a bright area of the original HDR image.

8. The method according to claim 3, further comprising:
   generating an image loss diagram, wherein the loss diagram comprises a plurality of areas whose distribution rule is the same as a distribution rule of the original HDR image, and in the plurality of areas of the loss diagram, a luminance value of an area that meets the loss threshold is marked as a first value; and a luminance value of an area that does not meet the loss threshold is marked as a second value.

9. The method according to any one of claims 1 to 8, wherein the determining image losses of a plurality of areas in the HDR image based on the original HDR image and the reconstructed HDR image comprises:

   performing luminance conversion processing on the original HDR image, to obtain a first image;
   performing luminance conversion processing on the reconstructed HDR image, to obtain a second image; and
   determining image luminance losses of the plurality of areas in the HDR image based on the first image and the second image.

10. The method according to any one of claims 1 to 8, wherein the determining image losses of a plurality of areas in the HDR image based on the original HDR image and the reconstructed HDR image comprises:

   performing pixel value conversion processing on the original HDR image, to obtain a reference image;
   performing luminance conversion processing on the reference image, to obtain a first image;
   performing luminance conversion processing on the reconstructed HDR image, to obtain a second image; and

determining the image luminance losses of the plurality of areas in the HDR image based on the first image and the second image.

11. The method according to claim 10, wherein the performing pixel value conversion processing on the original HDR image, to obtain a reference image comprises:
performing one or more of the following:

adding a first offset to an R value of each pixel in the original HDR image, to obtain a reference image;
adding a second offset to a G value of each pixel in the original HDR image, to obtain a reference image;
adding a third offset to a B value of each pixel in the original HDR image, to obtain a reference image;
subtracting a first offset from the R value of each pixel in the original HDR image, to obtain a reference image;
subtracting a second offset from the G value of each pixel in the original HDR image, to obtain a reference image; or
subtracting a third offset from the B value of each pixel in the original HDR image, to obtain a reference image.

12. The method according to claim 3, further comprising:

adjusting a model parameter if the area that does not meet the loss threshold in the plurality of areas exceeds a preset proportion, wherein the model parameter comprises a parameter used for generating the reconstructed HDR image based on the HDR image and the SDR image; and
returning to and performing, based on the model parameter, the step of generating the reconstructed HDR image based on the HDR image and the SDR image.

13. The method according to any one of claims 1 to 12, wherein the generating a reconstructed HDR image based on the original HDR image and the SDR image comprises:

generating a gain map based on the original HDR image and the SDR image; and
generating the reconstructed HDR image based on the gain map and the SDR image.

14. An electronic device, wherein the electronic device comprises one or more processors and a memory, wherein the memory is coupled to the one or more processors, the memory is configured to store computer programs, the one or more processors invoke the computer programs to enable the electronic device to perform the method according to any one of claims 1 to 13.

15. A chip system, wherein the chip system is applied to an electronic device, the chip system comprises one or more processors, and the processor is configured to invoke computer programs to enable the electronic device to perform the method according to any one of claims 1 to 13.

16. A computer program product comprising instructions, wherein when the computer program product is run on an electronic device, the electronic device is enabled to perform the method according to any one of claims 1 to 13.

17. A computer-readable storage medium, comprising computer programs, wherein when the computer programs run on an electronic device, the electronic device is enabled to perform the method according to any one of claims 1 to 13.

10

Electronic device

101

Processor

102

Memory

FIG. 1

S201: Generate a standard dynamic range SDR image based on an original high dynamic range HDR image

↓

S202: Generate a reconstructed HDR image based on the original HDR image and the SDR image

↓

S203: Determine image losses of a plurality of areas in the reconstructed HDR image based on the original HDR image and the reconstructed HDR image

↓

S204: Determine, based on the image losses of the plurality of areas, an area that meets a loss threshold and an area that does not meet a loss threshold in the plurality of areas

↓

S205: Generate the loss threshold based on information in the original HDR image

↓

S206: Generate an image loss diagram

↓

S207: Adjust a model parameter if the area that does not meet the loss threshold in the plurality of areas exceeds a preset proportion

↓

S208: Return to and perform, based on the model parameter, the step of generating the reconstructed HDR image based on the HDR image and the SDR image

FIG. 2

LOSS
L0≠L1

Luminance L0 of an original HDR image

SDR image

÷

Gain map (float)

Normalized gain map (int)

Gain map (float)

*

Luminance L1 of a reconstructed HDR image

FIG. 3

EP 4 769 302 A1

(a)                                                                    (b)

FIG. 4

FIG. 5

FIG. 6

FIG. 7

FIG. 8

FIG. 9

FIG. 10

FIG. 11

FIG. 12

## INTERNATIONAL SEARCH REPORT

| International application No. |
| --- |
| **PCT/CN2025/094800** |

**A. CLASSIFICATION OF SUBJECT MATTER**

G06T 7/00(2017.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; CNKI; USTXT; IEEE: 高动态范围, 标准动态范围, 重建, 损失, 像素, 阈值, 噪声, 个性化, 亮度, HDR, SDR, reconstruct, loss, pixels, threshold, noise, personalization, brightness

**C. DOCUMENTS CONSIDERED TO BE RELEVANT**

| Category* | Citation of document, with indication, where appropriate, of the relevant passages | Relevant to claim No. |
| --- | --- | --- |
| X | US 2021195221 A1 (DOLBY LABORATORIES LICENSING CORP.) 24 June 2021 (2021-06-24) <br> description, paragraphs 17-268 | 1-9, 12-17 |
| X | CN 108885783 A (DOLBY LABORATORIES LICENSING CORP.) 23 November 2018 (2018-11-23) <br> description, paragraphs 23-456 | 1-9, 12-17 |
| A | CN 116684629 A (VIVO MOBILE COMMUNICATION CO., LTD.) 01 September 2023 (2023-09-01) <br> entire document | 1-17 |
| A | US 9558554 B1 (IBM) 31 January 2017 (2017-01-31) <br> entire document | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 August 2025** | **27 August 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2025/094800**

| Patent document cited in search report | | | Publication date (day/month/year) | Patent family member(s) | | | Publication date (day/month/year) |
|---|---|---|---|---|---|---|---|
| US | 2021195221 | A1 | 24 June 2021 | US | 11277627 | B2 | 15 March 2022 |
| | | | | WO | 2019217751 | A1 | 14 November 2019 |
| | | | | EP | 3791577 | A1 | 17 March 2021 |
| | | | | JP | 2021518725 | A | 02 August 2021 |
| | | | | JP | 6964807 | B2 | 10 November 2021 |
| | | | | CN | 112106357 | A | 18 December 2020 |
| | | | | CN | 112106357 | B | 12 March 2024 |
| CN | 108885783 | A | 23 November 2018 | WO | 2017165494 | A2 | 28 September 2017 |
| | | | | WO | 2017165494 | A3 | 30 November 2017 |
| | | | | US | 2019110054 | A1 | 11 April 2019 |
| | | | | US | 10701375 | B2 | 30 June 2020 |
| | | | | EP | 3433833 | A2 | 30 January 2019 |
| | | | | EP | 3433833 | B1 | 07 July 2021 |
| | | | | HK | 1257716 | A1 | 25 October 2019 |
| | | | | CN | 108885783 | B | 15 February 2022 |
| | | | | HK | 1257716 | A0 | 25 October 2019 |
| CN | 116684629 | A | 01 September 2023 | WO | 2025011556 | A1 | 16 January 2025 |
| US | 9558554 | B1 | 31 January 2017 | | None | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410745724